# EUROPEAN PATENT APPLICATION

(11) **EP 4 538 343 A1**
(43) Date of publication of application: **16.04.2025**
(21) Application number: 23306736.2
(22) Date of filing: 09.10.2023
(51) Int. Cl.: C09J 133/10

(54) **CURABLE COMPOSITIONS**

(71) Applicant: ARKEMA FRANCE, 92700 Colombes (FR)
(72) Inventor: MEEHAN, Gabrielle, EXTON, Pennsylvania 19341 (US); HERR, Donald, EXTON, Pennsylvania 19341 (US); MACNEILL, Christopher, EXTON, Pennsylvania 19341 (US)
(74) Representative: Arkema Patent

(57) **Abstract**

A curable composition comprises a free radical polymerizable resin comprising at least one (meth)acrylate monomer, at least one (meth)acrylate oligomer, or both; B) a cationically polymerizable resin; C) a free radical photoinitiator; D) a photoacid generator; and E) a polyol; wherein a weight ratio of A:B is from 32:1 to 2:1. Methods of using the curable composition include using it as a dually curable pressure sensitive adhesive having good peel and cohesive strength.

## Description

### FIELD

Embodiments of the present disclosure relate to actinically curable compositions, and, more specifically to curable compositions capable of undergoing multiple curing mechanisms to provide pressure sensitive adhesives.

### BACKGROUND

Pressure sensitive adhesives (PSAs) allow users to press the adhesive onto a surface and form a bond using pressure without additional heat or energy. Generally, PSAs have the advantages of being soft, flexible, deformable solids that are safe to use and easy to handle. PSAs are widely used in numerous industries, including tapes and labels, automotive, electronics, and medical devices.

Traditional PSAs contain a variety of different polymeric compositions dissolved in a solvent, such as water or organic solvents. There is a class of PSAs known as actinically-curable PSAs. Actinically-curable PSAs have attracted attention due to the potential for improved cost, efficiency in curing, and overall better environmental footprint, relative to solvent-based PSAs. Solvent-based PSAs require large amounts of time and energy to coat the PSA composition and evaporate the solvent. When using organic solvents, solvent evaporation creates a class of pollution known as volatile organic compounds (VOCs) and thus requires expensive filtration and solvent recovery mechanisms. Although water-based solvents avoid the VOC issues of organic solvents, water-based solvents require even more energy for the drying process.

Historically, actinically-curable PSAs had limited levels of peel and shear strength (i.e., adhesive strength levels similar to general PSAs).

### SUMMARY

Curable compositions that combine the ease of use of traditional pressure sensitive adhesives, the ease of curing of UV-PSAs, and overcome the problem of insufficient adhesive strength are desired. This need can be met by the curable compositions disclosed herein comprising a free radical polymerizable resin, a cationically polymerizable resin; a free radical photoinitiator; and a photoacid generator.

Exemplary embodiments include a curable composition comprising: A) a free radical polymerizable resin comprising at least one (meth)acrylate monomer, at least one (meth)acrylate oligomer, or both; B) a cationically polymerizable resin; C) a free radical photoinitiator; D) a photoacid generator; and E) a polyol; wherein a weight ratio of A:B is from 32: 1 to 2:1.

These and other embodiments are described in more detail throughout this disclosure. Both the foregoing general description and the following detailed description provide exemplary embodiments, and provide an overview or framework for understanding the nature and character of the technology. Additionally, the descriptions are meant to be merely illustrative, and are not intended to limit the scope of the claims in any manner.

### DETAILED DESCRIPTION

There is a need in the art for curable compositions that combine the ease of use of pressure sensitive adhesives, the ease of curing of UV-PSAs, and overcome the problem of insufficient adhesive or cohesive strength. One or more embodiments disclosed herein meet this need by providing curable compositions comprising a free radical polymerizable resin, a cationically polymerizable resin; a free radical photoinitiator; a photoacid generator; and a polyol.

"Actinic light source" refers to a source of electromagnetic radiation that produces at least a portion of its electromagnetic radiation in the ultra-violet range (100 nm to 400 nm).

The term "aliphatic" refers to saturated and unsaturated hydrocarbons, straight chain (i.e., unbranched) or branched, cyclic or acyclic, excluding aromatic groups. The term "aliphatic" includes, but is not limited to, alkyl, alkenyl, alkynyl. Illustrative aliphatic groups thus include, but are not limited to, for example, methyl, ethyl, n-propyl, isopropyl, allyl, n-butyl, sec-butyl, isobutyl, tert-butyl, n-pentyl, sec-pentyl, and the like. isopentyl tert-pentyl, n-hexyl, sec-hexyl, alkenyl groups such as ethenyl, propenyl, 1-methyl-2-butene-1-yl, and alkynyl groups such as ethynyl, 2-propynyl (propargyl), and 1-propynyl.

"Cationically polymerizable resin" refers to a resin that forms polymers in the presence of cations.

"Curable composition" refers to a composition that changes properties based on a stimulus. Generally, curable compositions of the present disclosure cure through polymerization and/or crosslinking. Generally, those curable compositions cure upon the addition of energy to the system, that energy may come in the form of actinic light, heat, or both. Generally, when compounds in the curable composition contain carbon-carbon double bonds, polymerization (curing) involves reaction of such carbon-carbon double bonds.

"Epoxide" refers to a compound, such as a monomer, comprising one or more epoxy groups.

The term "photoinitiator," refers to any type of substance that, upon exposure to radiation (e.g., actinic radiation), forms species that initiate the reaction and curing of polymerizing organic substances in a curable composition.

"Free radical photoinitiator" refers to a compound that undergoes a photoreaction on absorption of light, producing reactive free radical species. The reactive species that are generated then initiate curing (polymerization) of the reactive components of the curable composition.

"Free radical polymerizable resin" refers to a resin capable of polymerizing when exposed to free radicals.

The term "(meth)acrylate group" refers to an acrylate group or a methacrylate group. An acrylate group corresponds to a group of the formula -O-C(=O)-CH=CHz. A methacrylate group corresponds to a group of the formula -O-C(=O)-C(CH₃)=CH₂.

"Monofunctional" refers to a compound having a single functional group. For example, a monofunctional (meth)acrylate monomer is a monomer having a single (meth)acrylate group.

"Monomer" refers to a molecule with one or more polymerizable functional groups. The monomer has a single molecular weight, typically below 1000 g/mol, preferably 100 to 950 g/mol. As is generally recognized in the field, commercial products of a particular monomer may contain impurities or other chemical species.

"Number-average molecular weight" or "Mₙ" refers to the statistical average molecular weight of the polymer chains in a sample or grouping. Number-average molecular weights reported herein are determined using a size exclusion chromatography (SEC) using polymethyl (meth)acrylate reference standards and tetrahydrofuran as the solvent, unless expressly noted otherwise.

"Oligomer" refers to molecules with a distribution of molecular weights and may or may not have one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol. An oligomer may not always have a single molecular weight.

"Photoacid generator" refers to a compound which releases protons or generates other cationic or acidic compounds when exposed to light.

"Polyol" refers to alcohols with more than one hydroxyl group.

Embodiments of the present disclosure are directed to a curable composition comprising: A) a free radical polymerizable resin comprising at least one (meth)acrylate monomer, at least one (meth)acrylate oligomer, or both; B) a cationically polymerizable resin; C) a free radical photoinitiator; D) a photoacid generator; and E) a polyol, wherein the weight ratio of A:B is from 32:1 to 2:1.

The curable composition comprises A) a free radical polymerizable resin. When combined with the free radical photoinitiator (C) and exposed to actinic radiation within a first wavelength range, the free radical polymerizable resin may polymerize, thereby causing the curable composition to form a pressure sensitive adhesive.

The free radical polymerizable resin may comprise at least one (meth)acrylate monomer, at least one (meth)acrylate oligomer, or both. The at least one (meth)acrylate monomer may be monofunctional (e.g., comprising a single (meth)acrylate group) or multifunctional (e.g., comprising a more than one (meth)acrylate groups), including difunctional or a combination thereof. In embodiments, most or all of the (meth)acrylate monomer(s) used are monofunctional, such as 95wt% to 99wt% of the (meth)acrylate monomer(s) being monofunctional and the remainder being difunctional, based on the total weight of the (meth)acrylate monomer(s). The at least one (meth)acrylate oligomer may be multifunctional, including difunctional. In embodiments, most or all of the (meth)acrylate oligomer(s) used are difunctional, such as 95wt% to 100wt% of the (meth)acrylate oligomer(s) being difunctional based on the total weight of the (meth)acrylate oligomers. As is well-known, (meth)acrylate oligomers may have an average functionality which is not an integer (e.g., an average functionality between 1.9 and 2.1), and such (meth)acrylate oligomers are suitable for use herein.

Classes of (meth)acrylate oligomers are diverse and well known by those skilled in the art. Contemplated classes of oligomers include urethane (meth)acrylates, (meth)acrylated epoxies ("epoxy (meth)acrylates"), (meth)acrylated polyesters, and (meth)acrylated siloxanes.

In addition to the (meth)acrylate group, the at least one (meth)acrylate oligomer may comprise urethane linkages. The at least one (meth)acrylate oligomer may be an aliphatic urethane (meth)acrylate oligomer. One suitable (meth)acrylate oligomer is available from Sartomer Americas under the designation CN9018.

Classes of (meth)acrylate monomers are diverse and well known by those skilled in the art. A wide range of (meth)acrylate monomers may be used herein. The at least one (meth)acrylate monomer may comprise a first (meth)acrylate monomer and a second (meth)acrylate monomer. It should be understood that the free radical polymerizable resin may comprise the first (meth)acrylate monomer, the second (meth)acrylate monomer, or the first and second (meth)acrylate monomers, and optionally others. In some embodiments, the free radical polymerizable resin may comprise the at least one (meth)acrylate oligomer, the first (meth)acrylate monomer, and the second (meth)acrylate monomer.

Examples of suitable monofunctional (meth)acrylate monomers include, but are not limited to, (meth)acrylate esters of aliphatic alcohols (wherein the aliphatic alcohol may be straight chain, branched or alicyclic and may be a mono-alcohol or a polyalcohol (e.g. a di-alcohol), provided only one hydroxyl group is esterified with (meth)acrylic acid); (meth)acrylate esters of aromatic alcohols (such as phenols, including alkylated phenols); (meth)acrylate esters of alkylaryl alcohols (such as benzyl alcohol); (meth)acrylate esters of oligomeric and polymeric glycols such as diethylene glycol, triethylene glycol, dipropylene glycol, tripropylene glycol, polyethylene glycol, and polypropylene glycol); (meth)acrylate esters of monoalkyl ethers of glycols and oligoglycols; (meth)acrylate esters of alkoxylated (e.g., ethoxylated and/or propoxylated) aliphatic alcohols (wherein the aliphatic alcohol may be straight chain, branched or alicyclic and may be a mono-alcohol or a polyalcohol (e.g. a di-alcohol), provided only one hydroxyl group of the alkoxylated aliphatic alcohol is esterified with (meth)acrylic acid); (meth)acrylate esters of alkoxylated (e.g., ethoxylated and/or propoxylated) aromatic alcohols (such as alkoxylated phenols); caprolactone mono(meth)acrylates; and the like.

The following compounds are specific examples of monofunctional (meth)acrylate monomers suitable for use in component A): methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobomyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

As noted above, the (meth)arylate monomer may be multifunctional. A multifunctional (meth)acrylate monomer may have from 2 to 6 (meth)acrylate groups, in particular 2 or 3 (meth)acrylate groups. Examples of suitable multifunctional (meth)acrylate monomers include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof. Examples of other suitable monofunctional (meth)acrylate monomers include, for example, caprolactone (meth)acrylate, 2-(2-ethoxyethoxy)ethyl (meth)acrylate, 2-phenoxyethyl (meth)acrylate, isooctyl (meth)acrylate, 2-octyl (meth)acrylate, 2-ethylhexyl (meth)acrylate, isodecyl (meth)acrylate, ethoxyethoxyethyl (meth)acrylate, neopentyl glycol (meth)acrylates and alkoxylated analogues thereof, as well as caprolactone-based (meth)acrylates prepared by addition of one, two, three or more moles of caprolactone to a hydroxyalkyl (meth)acrylate such as hydroxyethyl (meth)acrylate ("caprolactone adducts of hydroxyalkyl (meth)acrylates") and combinations thereof.

In embodiments, the first (meth)acrylate monomer may comprise an isobornyl group. The first (meth)acrylate monomer may be monofunctional (having a single (meth)acrylate group). The first (meth)acrylate monomer may comprise a single isobornyl group and a single acrylate group. The (meth)acrylate monomer comprising the isobornyl group may be isobornyl acrylate with Structure (I). Suitable commercially available monofunctional acrylate monomers of Structure (I) include SR506 A, available from Sartomer Americas.

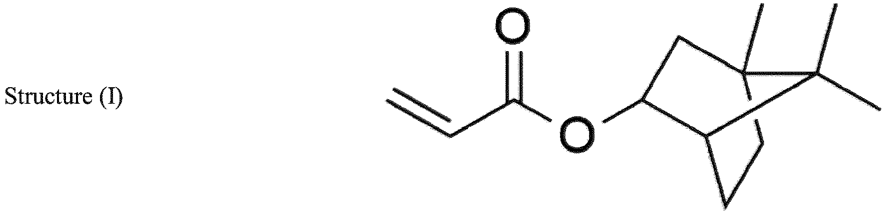

The second (meth)acrylate monomer may comprise a furfuryl group. The second (meth)acrylate monomer may be monofunctional (having a single (meth)acrylate group). The second (meth)acrylate monomer may comprise a single acrylate group and a single furfuryl group. In embodiments, the second (meth)acrylate monomer may be an alkoxylated tetrahydrofurfuryl acrylate. In embodiments, the second (meth)acrylate monomer may have Structure (II).

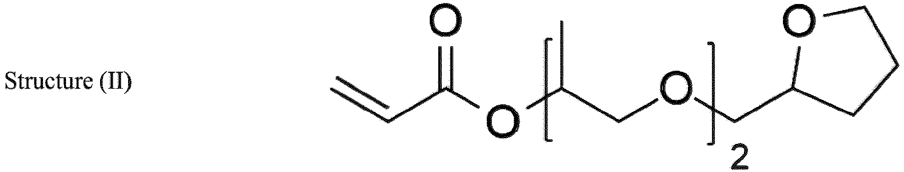

Suitable second acrylate monomers are available under the designation SR611, available from Sartomer Americas.

In embodiments, the curable composition may comprise the first (meth)acrylate monomer and the second (meth)acrylate monomer. The ratio of the first (meth)acrylate monomer to the second (meth)acrylate monomer may be from 2:1 to 1:2, from 8:5 to 1:2, from 6:5 to 1:2, from 4:5 to 1:2, from 3:5 to 1:2, from 8:5 to 5:8, from 6:5 to 5:6, from 11:10 to 10:11, from 2:1 to 5:8, from 2:1 to 6:5, from 2:1 to 5:4, from 2:1 to 5:3, or any subset thereof. In embodiments, the ratio of the first (meth)acrylate monomer to the second (meth)acrylate monomer may be from 9:10 to 11:10.

In particular, the at least one (meth)acrylate monomer may be selected from the group consisting of isobornyl (meth)acrylate (preferably IBOA), an alkoxylated tetrahydrofurfuryl (meth)acrylate (preferably THFA), or both.

The free radical polymerizable resin (A) may comprise at least 80 wt. %, such as at least 90 wt. %, at least 95 wt. %, or at least 99 wt. % of the at least one (meth)acrylate monomer, the at least one (meth)acrylate oligomer, or both, on the basis of the total weight of the free radical polymerizable resin (A). The free radical polymerizable resin (A) may comprise other ethylenically unsaturated materials, such as allyl, malonates, and itaconates. The free radical polymerizable resin (A) may consist essentially of or consist of the combination of the at least one (meth)acrylate monomer and the at least one (meth)acrylate oligomer. The weight ratio of at least one (meth)acrylate monomer to the at least one (meth)acrylate oligomer in the free radical polymerizable resin (A) may vary over a wide range, such as from 1:9 to 49:1, from 1:4 to 39:1, from 1:2 to 19:1, or from 1:1 to 19:1.

The curable composition comprises C) a free radical photoinitiator. The free radical photoinitiator may be sensitive to actinic radiation within a first wavelength range. The free radical photoinitiator is operable to cure the free radical polymerizable resin. Generally, free radical photoinitiators can adopt two different modes of action, and are classified by mode of action as Norrish Type I and Norrish Type II photo-initiators. In some embodiments, the free radical photoinitiator comprises a Norrish Type I photo-initiator, a Norrish Type II photo-initiator, or both.

As used herein, the term "activity" with reference to Norrish Type I and Norrish Type II activity is intended to relate to Norrish photoinitiation and analogous reactions. For instance, a photoinitiator having Norrish Type I activity would be a photoinitiator characterized by a cleavage reaction into two radical fragments of the original photoinitiator on exposure to actinic radiation within a first wavelength range. For an initiator having Norrish Type II activity, exposure to actinic radiation within a first wavelength range causes the formation of a radical species which can abstract a hydrogen to create a second radical species which can initiate a photo polymerization. The Norrish Type I and Norrish Type II mechanisms are known to the person of ordinary skill in the art. Free radical photoinitiators suitable for use in the curable compositions of the present disclosure include, but are not limited to, benzoins, benzoin ethers, acetophenones, α-hydroxy acetophenones, benzyl, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable free radical photoinitiators may include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

Suitable free radical photoinitiators include a benzophenone (such as those available from Sartomer Americas, under the trademarks Speedcure^{™} BP, Speedcure^{™} 7005, and Speedcure^{™} 7006), a thioxanthone (such as available from Sartomer Americas, under the trademarks Speedcure^{™} 7010 and Speedcure^{™} ITX), an α-hydroxy acetophenone, an acylphosphine oxide (such as available from Sartomer Americas, under the trademarks Speedcure^{™} BPO, Speedcure^{™} TPO and Speedcure^{™} TPO-L) and combinations thereof.

The free radical photoinitiator may be an acylphosphine oxide. As used herein, the term "phosphine oxide" refers to a compound comprising a -P(=O)- group. The acylphosphine oxide may have Structure (III).

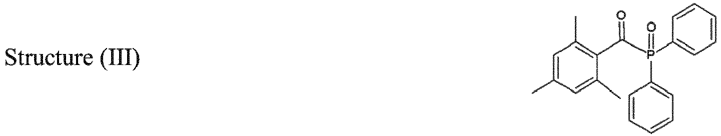

The free radical photoinitiator may be a phenylpropanone, such as a phenylpropanone with Structure (IV).

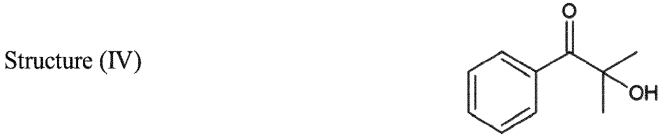

The free radical photoinitiator may be a blend of the acylphosphine oxide and the phenylpropanone, such as the acylphosphine oxide with Structure (III) and the phenylpropanone with Structure (IV).

The free radical photoinitiator may be sensitive to actinic radiation within a first wavelength range. Being sensitive to actinic radiation within the first wavelength range means that when the free radical photoinitiator is exposed to actinic radiation within the first wavelength range, the free radical photoinitiator generates a radical. The first wavelength range may include long wavelength ultra-violet (UV) light, such as light with a wavelength of greater than 365 nm, and may be from 365 nm to 450 nm. In some embodiments, the actinic radiation within a first wavelength range may be produced by an LED light, such as an LED emitting at 365 nm, 395 nm, 405 nm, or a combination thereof.

The free radical photoinitiator may have absorption maxima within the wavelengths defining first wavelength range. The free radical photoinitiator may have additional absorption maxima outside the wavelengths defining the first wavelength range. In addition to the light of the first wavelength range, the free radical photoinitiator may be sensitive to wavelengths outside those defined as the first wavelength range, including those of the second wavelength range.

The curable composition comprises B) a cationically polymerizable resin. The term "cationically polymerizable compound" means a compound comprising a polymerizing functional group that polymerizes via a cationic mechanism, for example a cationically polymerizable group may comprise a heterocyclic group or a carbon-carbon double bond substituted with an electron-donating group. In a cationic polymerization mechanism, a cationic initiator accepts charge from the cationically polymerizable compound, which then becomes reactive and leads to chain growth by reaction with another cationically polymerizable compound. Without being limited by theory, it would appear that the cationically polymerizable resin, in conjunction with the photoacid generator, polymerizes more slowly than the free radical polymerizable resin. However, it appears that the bond formed by the cationically polymerizable resin is stronger than the bonds formed by the polymerization of the free radical polymerizable resin.

The cationically polymerizable compound may be selected from epoxides, oxetanes, vinyl ethers, vinyl amides, oxolanes, cyclic acetals, cyclic lactones, thiiranes, thiethanes, spiro orthoesters, ethylenically unsaturated compounds other than (meth)acrylates, derivatives thereof and mixtures thereof.

The epoxides may comprise aromatic epoxides, cycloaliphatic epoxides, oxetanes and mixtures thereof. Suitable epoxy-functionalized compounds capable of being cationically polymerized include glycidyl ethers, in particular mono-, di-, tri- and polyglycidyl ether compounds, and alicyclic ether compounds including those comprising residue of carboxylic acids such as, for example, alkylcarboxylic acid residual groups, alkylcycloalkylcarboxylic acid residual groups and dialkyl dicarboxylic acid residual groups. For example, the epoxy-functionalized compounds may be bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4- epoxycyclohexylmethyl-3',4'-epoxycyclohexanecarboxylate, 2-(3,4-epoxycyclohexyl-5,5-spiro-3,4- epoxy)cyclohexane-1,4-dioxane, bis(3,4-epoxycyclohexylmethyl)adipate, vinylcyclohexene oxide, limonene dioxide, bis(3,4-epoxy-6-methylcyclohexylmethyl)adipate, 3,4-epoxy-6- methylcyclohexyl-3',4'-epoxy-6'-methylcyclohexanecarboxylate, methylenebis(3, 4-epoxycyclohexane), dicyclopentadiene diepoxide, di(3,4-epoxycyclohexylmethyl) ether of ethylene glycol, ethylenebis(3, 4-epoxycyclohexanecarboxylate), epoxyhexahydrodioctylphthalate, epoxyhexahydro-di-2-ethylhexyl phthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of polyether polyol obtained by the addition of one or more alkylene oxides to aliphatic polyhydric alcohols such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

The cationically polymerizable resin may comprise an epoxide resin, preferably a multi-functional (preferably difunctional) epoxide resin.

The epoxide may comprise a cycloaliphatic epoxide. The cationically polymerizable resin may comprise a difunctional epoxide resin, such as a difunctional cycloaliphatic epoxide resin. The difunctional cycloaliphatic epoxide resin may have Structure (V).

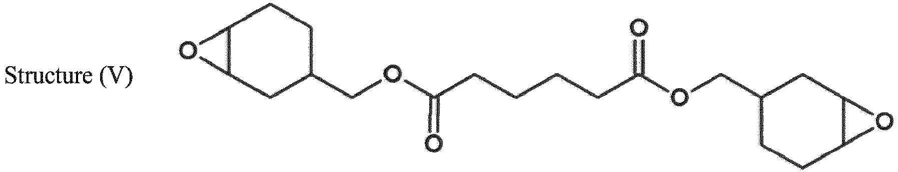

The cationically polymerizable resin may comprise at least 80 wt. %, such as at least 90 wt. %, at least 95 wt. %, at least 99 wt. %, or even at least 99.9 wt. % of epoxide resin on the basis of the total weight of the cationically polymerizable resin (B). The cationically polymerizable resin may comprise, consist essentially of, or consist of at least one epoxide resin.

Suitable oxetanes capable of being cationically polymerized include trimethylene oxide, 3,3-dimethyloxetane, 3,3-dichloromethyloxetane, 3-ethyl-3-phenoxymethyloxetane, and bis(3-ethyl-3- methyloxy)butane, 3-ethyl-3-oxetanemethanol.

Suitable oxolanes capable of being cationically polymerized include tetrahydrofuran and 2,3-dimethyl tetrahydrofuran.

Suitable cyclic acetals capable of being cationically polymerized include trioxane, 1,3-dioxolane, and 1,3,6-trioxanecyclooctane.

Suitable cyclic lactones capable of being cationically polymerized include b-propiolactone and e- caprolactone.

Suitable thiiranes capable of being cationically polymerized include ethylene sulfide, 1,2-propylene sulfide, and thioepichlorohydrin.

Suitable thiethanes capable of being cationically polymerized include 3,3-dimethylthiethane.

Suitable spiro orthoesters capable of being cationically polymerized are compounds obtained by the reaction of an epoxy compound and a lactone.

Additional suitable ethylenically unsaturated compounds capable of being cationically polymerized include vinyl ethers such as ethylene glycol divinyl ether, triethylene glycol divinyl ether and trimethylolpropane trivinyl ether; aliphatic vinyl monomers such as vinylcyclohexane; olefins such isobutylene; dienes such as butadiene; vinyl alkyl ethers; vinyl aromatic monomers such as styrene and alkylstyrenes; unsaturated polymers such as polybutadiene; derivatives of the above organic substances; and the like, at least some of which may also be polymerizable by free radical mechanisms.

The curable composition comprises D) a photoacid generator. The photoacid generator may be sensitive to actinic radiation in a second wavelength range. The second wavelength range may be different from the first wavelength range. In some embodiments, the second wavelength range may be different from but overlapping with, the first wavelength range. Generally, photoacid generators are often salts, for instance iodonium and sulfonium salts. When these salts are irradiated with the actinic radiation within the second wavelength range, they undergo homolytic bond cleavage forming radicals that react with a proton donor to give a Bronsted or Lewis acid. This acid initiates the polymerization reaction.

The photoacid generator (also known as a cationic photoinitiator) may comprise onium salts, such as iodonium, sulfonium, pyridinium, alkoxypyridinium, phosphonium, oxonium, or diazonium salts. In embodiments, the photoacid generator may comprise sulfonium salts, iodonium salts, and/or other onium salts. In particular, the photoacid generator may be an onium salt, such as a diaryliodonium salt and/or a triarylsulfonium salt. Included among such photoacid generator are sulfonium salts. Included among sulfonium salts are aromatic sulfonium salts. Specific examples thereof include triphenylsulfonium salts, methyldiphenylsulfonium salts, dimethylphenylsulfonium salts, diphenylnaphthylsulfonium salts and di(methoxynaphthyl)methylsulfonium salts. Included among such aromatic sulfonium salts are aromatic sulfonium salts with hexafluorophosphate ions (PF6⁻) or hexafluoroantimonate ions (SbF6-) as counterions. Specific examples include triphenylsulfonium hexafluorophosphate, methyldiphenyl-sulfonium hexafluorophosphate, dimethylphenyl-sulfonium hexafluorophosphate, diphenylnaphthyl-sulfonium hexafluorophosphate, di(methoxynaphthyl)methyl-sulfonium hexafluoro-phosphate and triarylsulfonium hexafluoroantimonate (e.g., Speedcure 976).

The photoacid generator may comprise a triarylsulfonium salt, such as (Sulfanediyldibenzene-4,1-diyl)bis(diphenylsulfonium) bis(hexafluoroantimonate). The triarylsulfonium salt may comprise a compound of Structure VI, VII or both. Suitable triarylsulfonium salt based photoacid generators are available from Sartomer Americas, under the trademark Speedcure^{™} 976.

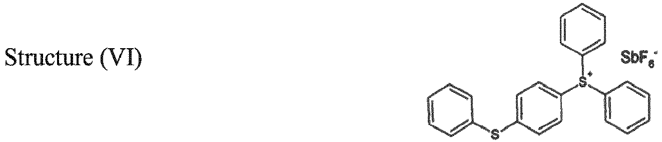

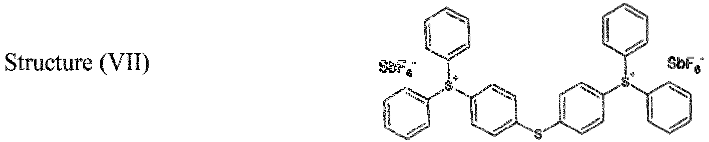

In embodiments, the photoacid generator may comprise at least 80 wt. %, at least 90 wt. %, at least 95 wt. %, at least 99 wt. %, or even at least 99.9 wt. % of the onium salt, such as the sulfonium salt, on the basis of the total weight of the photoacid generator. The photoacid generator may comprise, consist of, or consist essentially of at least one onium salt.

The photoacid generator may optionally be coupled to a photosensitizing compound. Without being limited by theory, certain radical photoinitiators, when excited with light, can function as reducing agents to interact with the photoacid generator (such as an iodonium salt) in a redox reaction. The resulting oxidized radical photoinitiator is then a cation, which may initiate cationic polymerization directly or interact with other components in the formulation to produce active cations which can initiate cationic photopolymerization. In embodiments, the photosensitizing compound may be the free radical photoinitiator sensitive to actinic radiation within a first wavelength range. In embodiments, the free radical photoinitiator may be a Norrish type I photoinitiator. Examples of such Type I photoinitiators include but are not limited to Speedcure TPO, Speedcure BKL (Irgacure 651), and Speedcure BPO (BAPO). In other embodiments, the free radical photoinitiator may be selected from various Norrish Type II photoinitiators such as xanthone, thioxanthone, isopropylthioxanthone, chloropropoxythioxanthone, diethylthioxanthone, benzophenone, and acetophenone, or derivatives thereof, as long as said photosensitizer absorbs at the desired wavelength. In embodiments, the photoacid generator may be an iodonium salt and the free radical photoinitiator may be selected from xanthone, thioxanthone, isopropylthioxanthone, chloropropoxythioxanthone, diethylthioxanthone, benzophenone, and acetophenone, acylphosphine oxide, or derivatives thereof.

Suitable iodonium salts may be selected from the group consisting of bis(4-dodecylphenyl)iodonium hexafluoroantimonate (structure VIII); bis-(4-t-butylphenyl)-iodonium hexafluorophosphate (structure VIV); and 4-isopropyl-4'-methyldiphenyliodonium tetrakis(pentafluorophenyl)borate (structure X). Suitable commercially available bis(4-dodecylphenyl)iodonium hexafluoroantimonate of Structure (VIII) are available from Sartomer Americas under the trademark Speedcure^{™} 937. Suitable commercially available bis-(4-t-butylphenyl)-iodonium hexafluorophosphate of Structure (VIV) are available from Sartomer Americas under the trademark Speedcure^{™} 938. Suitable commercially available 4-isopropyl-4'-methyldiphenyliodonium tetrakis(pentafluorophenyl)borate of Structure (X) are available from Sartomer Americas under the trademark Speedcure^{™} 939.

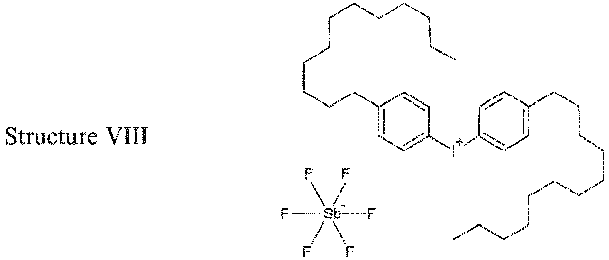

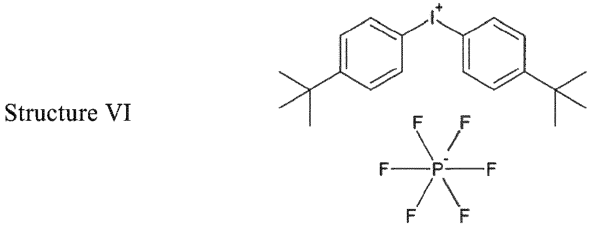

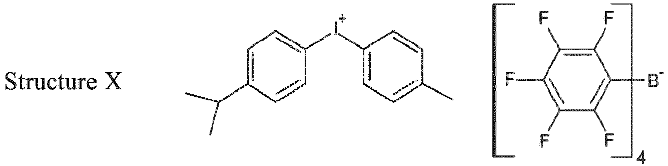

The photoacid generator may be sensitive to actinic radiation within the second wavelength range.

The second wavelength range may be different from the first wavelength range. Without being limited by theory, the use of a second wavelength range different from the first wavelength range may allow the operator to independently cure the free radical polymerizable resin separately from the cationically polymerizable resin. In embodiments, the photoacid generator may not be sensitive to the first wavelength range, or at least the photoacid generator may not be sensitive to portions of the first wavelength range.

The actinic radiation within the second wavelength range may comprise ultra-violet (UV) light, such as light in the UVB and UVC ranges, such as light with a wavelength of from 180 nm to 400 nm, such as from 200 nm to 400 nm or from 200 nm to 320 nm. In embodiments, the actinic radiation within the second wavelength range may be produced by an H-bulb (mercury bulb).

Being sensitive to actinic radiation within the second wavelength range means that when the photoacid generator is exposed to the second actinic light source, the photoacid generator produces an acid.

The photoacid generator may have absorption maxima within the second wavelength range. The photoacid generator may have additional absorption maxima outside the second wavelength range. In addition to the actinic radiation within the second wavelength range, the photoacid generator may be sensitive to wavelengths outside those defined as the second wavelength range. In some cases, it is preferable the photoacid generator is not sensitive to the wavelengths utilized as the first wavelength range to excite the free radical photoinitiator.

The curable composition comprises E) a polyol. The polyol may be added to the curable composition to adjust the properties of the curable composition, such as flexibility, toughness, hydrolytic stability, and cure rate. Without being limited by theory, it is believed that the polyol may serve as a chain transfer agent, increasing the cure rate. The polyols can be one or more of polyether polyols, polyurethane polyols, polyacrylate polyols, polyester polyols, polycarbonate polyols, and polycaprolactone polyols. In particular, the polyol may comprise or be a polycaprolactone polyol, a polyether polyol, or a polyester polyol, preferably a polycaprolactone polyol

The polyol may be a diol, a triol, or a higher polyol, in particular a triol or higher functional polyol. It should be understood that a diol is a polyol having two hydroxy groups, and a triol is a polyol having three hydroxy groups. Without being limited by theory, it is believed that when the polyol is multifunctional (a diol, a triol, or a higher polyol), the chain transfer process will create crosslinking in the curable composition as the curable composition cures. In embodiments, the polyol may be a triol.

The polyol may be a polycaprolactone polyol produced from the ring opening of a lactone molecule. In embodiments, the polycaprolactone polyol may have structure (XI). 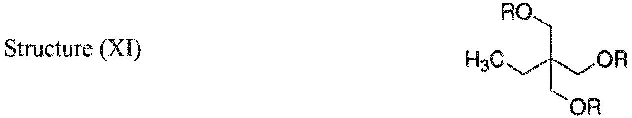 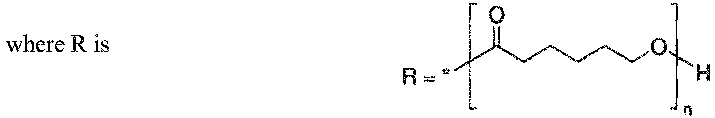 wherein n is 1 to 10.

The polyol may have a viscosity (as measured by the method described below) of less than 1000 cP at 25 °C, such as less than 750 cP, less than 500 cP, less than 250 cP, less than 200 cP, less than 150 cP, from 10 cP to 1000 cP, from 10 cP to 500 cP, from 10 cP to 250 cP, from 10 cP to 200 cP, from 50 cP to 1000 cP, from 50 cP to 500 cP, from 50 cP to 250 cP, from 50 cP to 200 cP, from 100 cP to 1000 cP, from 100 cP to 500 cP, from 100 cP to 250 cP, from 100 cP to 200 cP, or any subset thereof.

The polyol may have a OH value of from 400 mg KOH/g to 800 mg KOH/g, such as from 500 KOH/g to 800 KOH/g, from 400 KOH/g to 700 KOH/g, from 400 KOH/g to 600 KOH/g, from 500 KOH/g to 600 KOH/g, or any subset thereof, on the basis of the total weight of the polyol.

Suitable polyols include Capa^{™} 3031, available from Perstorp Polyols Inc.

The curable compositions of the present disclosure may contain one or more additives in addition to the above-mentioned components. Such additives include, but are not limited to, antioxidants, ultraviolet absorbers, photostabilizers, foam inhibitors, flow or leveling agents, colorants, pigments, dispersants (wetting agents), slip additives, fillers (other than or in addition to inorganic nanoparticles), thixotropic agents, matting agents, accelerators, adhesion promoters (such as acidic adhesion promoters), tackifiers, thermoplastics and other types of polymers (other than or in addition to the above-described block copolymers), waxes or other various additives, including any of the additives conventionally utilized in the coating, sealant, adhesive, molding, or ink arts. In embodiments, the curable composition may comprise from 0 wt. % to 20%, from 0 wt. % to 10 wt. %, from 0 wt. % to 5 wt. %, from 0 wt. % to 1 wt. %, from 0 wt. % to 0.1 wt. %, from 0 wt. % to 0.01 wt. %, or any subset thereof of the additives.

In embodiments, the curable compositions of the present disclosure may not include hot melt processable polymers, such as acrylic hot melt polymers (also known as hot glues), which are generally 100% solid formulations based on thermoplastic polymers. Hot melt processable polymers are solid at room temperature and are 'activated' upon heating beyond their softening point. Once melted, the adhesive can then be applied onto a substrate in its liquefied or molten state. A high molecular weight hot melt processable polymer is a polymer with a molecular weight (Mn) of from 50,000 g/mol to 500,000 g/mol, such as from 150,000 g/mol to 200,000 g/mol; a molecular weight (Mw) of from 100,000 g/mol to 1,000,000 g/mol, such as from 400,000 g/mol to 700,000 g/mol; and a melting point of from 80 °C to 130 °C. In embodiments, the curable composition may comprise less than 1 wt. %, such as from 0 wt. % to 1 wt. %, from 0 wt. % to 0.1 wt. %, from 0 wt. % to 0.01 wt. %, or any subset thereof of the hot melt processable polymers.

The curable composition may comprise from 60 wt. % to 90 wt. % of the free radical polymerizable resin (A), on the basis of the total weight of the curable composition. The curable composition may preferably comprise from 65 wt. % to 87.5 wt. %, more preferably from 67.5 wt. % to 86 wt. %, or any subset thereof of the free radical polymerizable resin (A), on the basis of the total weight of the curable composition. In embodiments, the curable composition may comprise from 60 wt. % to 80 wt. %, from 60 wt. % to 70 wt. %, from 65 wt. % to 90 wt. %, from 70 wt. % to 90 wt. %, from 75 wt. % to 90 wt. %, from 80 wt. % to 90 wt. % from 85 wt. % to 90 wt. %, from 70 wt. % to 86 wt. %, from 75 wt. % to 86 wt. %, or any subset thereof of the free radical polymerizable resin (A), on the basis of the total weight of the curable composition.

The curable composition may comprise from 1 wt. % to 60 wt. % preferably 2 wt. % to 30 wt. %, more preferably 2 wt. % to 15 wt. %, of the at least one (meth)acrylate oligomer, on the basis of the total weight of the curable composition. In embodiments, the curable composition may comprise from 5 wt. % to 40 wt. %, from 8 wt. % to 30 wt. %, from 2 wt. % to 10 wt. %, from 4 wt. % to 10 wt. %, from 4 wt. % to 5 wt. %, or any subset thereof of the at least one (meth)acrylate oligomer, on the basis of the total weight of the curable composition.

The curable composition may comprise from 20 wt. % to 89 wt. %, preferably 40 wt. % to 87.5 wt. %, more preferably 50 wt. % to 85 wt. %, wt. %, of the at least one (meth)acrylate monomer, on the basis of the total weight of the curable composition. In embodiments, the curable composition may comprise from 30 wt. % to 89 wt. %, from 40 wt. % to 85 wt. %, from 60 wt. % to 85 wt. %, from 70 wt. % to 85 wt. %, from 20 wt. % to 75 wt. %, from 20 wt. % to 65 wt. %, from 20 wt. % to 55 wt. %, from 20 wt. % to 45 wt. %, from 20 wt. % to 35 wt. %, from 30 wt. % to 80 wt. %, from 35 wt. % to 75 wt. %, from 40 wt. % to 70 wt. %, or any subset thereof of the at least one (meth)acrylate monomer, on the basis of the total weight of the curable composition.

In an embodiment, the curable composition may comprise from 1 wt. % to 60 wt. %, preferably 2 wt. % to 30 wt. %, more preferably 2 wt. % to 15%, of the at least one (meth)acrylate oligomer and from 20 wt. % to 89 wt. %, preferably 40 wt. % to 87.5 wt. %, more preferably 50 wt. % to 85 wt. %, of the at least one (meth)acrylate monomer, on the basis of the total weight of the curable composition. In particular, the curable composition may comprise from 5 wt. % to 40 wt. %, from 8 wt. % to 30 wt. %, from 2 wt. % to 10 wt. %, from 4 wt. % to 10 wt. %, from 4 wt. % to 5 wt. %, or any subset thereof of the at least one (meth)acrylate oligomer and from 30 wt. % to 89 wt. %, from 40 wt. % to 85 wt. %, from 50 wt. % to 85 wt. %, from 60 wt. % to 85 wt. %, from 70 wt. % to 85 wt. %, from 20 wt. % to 75 wt. %, from 20 wt. % to 65 wt. %, from 20 wt. % to 55 wt. %, from 20 wt. % to 45 wt. %, from 20 wt. % to 35 wt. %, from 30 wt. % to 80 wt. %, from 35 wt. % to 75 wt. %, from 40 wt. % to 70 wt. %, or any subset thereof of the at least one (meth)acrylate monomer, on the basis of the total weight of the curable composition.

The curable composition may comprise from 2 wt. % to 30 wt. % of the cationically polymerizable resin (B), on the basis of the total weight of the curable composition. In embodiments, the curable composition may preferably comprise from 4 wt. % to 27.5 wt. %, more preferably from 5 wt. % to 25 wt. % or any subset thereof of the cationically polymerizable resin (B), on the basis of the total weight of the curable composition. In embodiments, the curable composition may comprise from 5 wt. % to 15 wt. %, from 5 wt. % to 10 wt. %, from 10 wt. % to 30 wt. %, from 15 wt. % to 30 wt. %, from 20 wt. % to 30 wt. %, from 25 wt. % to 30 wt. %, from 10 wt. % to 25 wt. %, from 15 wt. % to 20 wt. %, from 10 wt. % to 28 wt. %, from 15 wt. % to 25 wt. %, or any subset thereof of the cationically polymerizable resin (B), on the basis of the total weight of the curable composition.

The weight ratio of the free radical polymerizable resin (A) to the cationically polymerizable resin (B) is from 32:1 to 2:1. The ratio of A:B may be from 19:1 to 7:3 or from 11:1 to 4:1.

The curable composition may comprise from 0.5 wt. % to 8 wt. %., preferably from 1 wt. % to 7 wt. %, and more preferably from 3 wt. % to 6 wt. %, of the free radical photoinitiator (C), on the basis of the total weight of the curable composition. In embodiments, the curable composition may comprise from 1 wt. % to 7 wt. %, from 2 wt. % to 7 wt. %, from 3 wt. % to 7 wt. %, from 4 wt. % to 7 wt. %, from 5 wt. % to 7 wt. %, from 0.5 wt. % to 6 wt. %, from 0.5 wt. % to 5 wt. %, from 0.5 wt. % to 4 wt. %, from 0.5 wt. % to 3 wt. %, from 0.5 wt. % to 2 wt. %, from 1 wt. % to 4 wt. %, from 2 wt. % to 3 wt. %, or any subset thereof of the free radical photoinitiator, on the basis of the total weight of the curable composition.

The curable composition may comprise from 0.25 wt. % to 5 wt. %, preferably from 0.5 wt. % to 4 wt. %, more preferably from 1 wt. % to 3 wt. %, of the photoacid generator (D), on the basis of the total weight of the cationically polymerizable resin. In embodiments, the curable composition may comprise from 0.25 wt. % to 3 wt. %, from 0.25 wt. % to 2.5 wt. %, from 1 wt. % to 4 wt. %, from 2 wt. % to 4 wt. %, from 0.5 wt. % to 3 wt. %, from 1 wt. % to 2.5 wt. %, or any subset thereof of the photoacid generator (D), on the basis of the total weight of the cationically polymerizable resin. The concentration of the photoacid generator refers to the concentration of the photoacid generator compound itself and does not include any solvents or co-compounds which are not photoacid generators.

The curable composition may comprise from 0.5 wt. % to 10 wt. %, preferably from 0.75 wt. % to 7.5 wt. %, more preferably from 1 wt. % to 5 wt. % of the polyol, of the polyol (E), on the basis of the total weight of the curable composition. In embodiments, the curable composition may comprise from 0.5 wt. % to 9 wt. %, from 0.5 wt. % to 8 wt. %, from 0.5 wt. % to 7.5 wt. %, from 0.5 wt. % to 7 wt. %, from 0.5 wt. % to 6 wt. %, from 0.5 wt. % to 5 wt. %, from 1 wt. % to 10 wt. %, from 1 wt. % to 7.5 wt. %, or any subset thereof of the polyol (E), on the basis of the total weight of the curable composition.

The curable composition may comprise:
from 60 wt. % to 90 wt. %, %, preferably 65 wt. % to 87.5 wt. %, more preferably 67.5 wt. % to 86 wt. % of the free radical polymerizable resin;
from 2 wt. % to 30 wt. %, preferably 4 wt. % to 27.5 wt. %, more preferably 5 wt. % to 25 wt. % of the cationically polymerizable resin;
from 0.5 wt. % to 8 wt. %, preferably 1 wt. % to 7 wt. %, more preferably 3 wt. % to 6 wt. % of the free radical photoinitiator;
from 0.25 wt. % to 5 wt. %, preferably from 0.5 wt. % to 4 wt. %, more preferably from 1 wt. % to 3 wt. % of the photoacid generator; and
from 0.5 wt. % to 10 wt. %, preferably from 0.75 wt. % to 7.5 wt. %, more preferably from 1 wt. % to 5 wt. % of the polyol, on the basis of the total weight of the curable composition.

The curable composition may comprise at least 80 wt. %, such as at least 90 wt. %, at least 95 wt. %, at least 99 wt. %, or even at least 99.9 wt. % of the total weight of A) the free radical polymerizable resin; B) the cationically polymerizable resin; C) the free radical photoinitiator; D) the photoacid generator; and E) the polyol, on the basis of the total weight of the curable composition. The curable composition may comprise, consist essentially of, or consist of A) the free radical polymerizable resin; B) the cationically polymerizable resin; C) the free radical photoinitiator; D) the photoacid generator; and E) the polyol.

The curable composition may be partially cured, such as by exposure to the actinic radiation within a first wavelength range, thereby forming a partially cured reaction product. The partially cured reaction product may be a pressure sensitive adhesive. A pressure sensitive adhesive is a polymer with a storage modulus (G) below 1×10⁵ Pa as measured on a shear rheometer.

The curable composition may be cured through exposure to the actinic radiation within a first wavelength range, and the actinic radiation within the second wavelength range, thereby forming a radically and cationically-cured composition. The dual-cured composition may have a 180 degree peel strength of at least 2 pounds force per inch (lb/in). In embodiments, the dual-cured composition may have a 180 degree peel strength of at least 3 lb/in, at least 4 lb/in, at least 5 lb/in, or at least 6 lb/in, for example measured according to ASTM D3330.

The curable composition may be cured through exposure to the actinic radiation within a first wavelength range, the actinic radiation within the second wavelength range, and a thermal bump, thereby forming a post-cured composition. The post-cured composition may have a 180 degree peel strength of at least 2 lb/in. In embodiments, the post-cured composition may have a 180 degree peel strength of at least 3 lb/in, at least 4 lb/in, at least 5 lb/in, or at least 6 lb/in, for example measured according to ASTM D3330.

The dual-cured composition may have a static shear strength of at least 500 minutes. In embodiments, the dual-cured composition may have a static shear strength of at least 750 minutes, at least 1000 minutes, at least 1500 minutes, at least 2000 minutes, at least 5000 minutes, or at least 10000 minutes, for example measured according to ASTM D3654 under a 500 g load at a temperature of 27 °C.

The post-cured composition may have a static shear strength of at least 500 minutes. In embodiments, the post-cured composition may have a static shear strength of at least 750 minutes, at least 1000 minutes, at least 1500 minutes, at least 2000 minutes, at least 5000 minutes, or at least 10000 minutes, for example measured according to ASTM D3654 under a 500 g load at a temperature of 27 °C.

A method of curing the curable composition may include exposing the curable composition to the actinic radiation within a first wavelength range, thereby producing an at least partially radically cured composition; and exposing the radically cured composition to actinic radiation within the second wavelength range to produce a dual-cured composition.

In some embodiments, such as when the photoacid generator is an iodonium salt, the curable composition may be cured by exposing the curable composition to actinic radiation within the first wavelength range, thereby producing a dual-cured composition. In such embodiments, the actinic radiation within the first wavelength range may activate both the free radical photoinitiator and the photoacid generator. If the first light source is long wavelength (outside the direct absorbance of the photoacid generator as described above), an iodonium salt may be activated through "redox sensitization" of the iodonium salt by the radicals produced from the radical photoinitiator. Generally, it is believed sulfonium salts are not as useful in such a system, because sulfonium salts are weaker oxidizing agents than iodonium salts. In embodiments, the composition may be cured in one step by a short wavelength light source using a radical photoinitiator and either a sulfonium or iodonium salt photoacid generator. In these single step embodiments, the short wavelength light may activate both the radical and cationic photoinitiators, regardless of whether the cationic initiator is a sulfonium or iodonium salt.

The curable composition may be exposed to the actinic radiation within the first wavelength range with a total first actinic light dose of from 100 mJ/cm² to 2000 mJ/cm², such as from 250 mJ/cm² to 2000 mJ/cm², from 500 mJ/cm² to 2000 mJ/cm², or any subset thereof.

The curable composition may be exposed to the actinic radiation within the first wavelength range at room temperature, such as from 20 °C to 30 °C.

The radically cured composition may be exposed to the actinic radiation within the second wavelength range with a total second actinic light dose of from 200 mJ/cm² to 5000 mJ/cm², such as from 500 mJ/cm² to 5000 mJ/cm², from 1000 mJ/cm² to 5000 mJ/cm², from 1500 mJ/cm² to 5000 mJ/cm², or any subset thereof.

The radically cured composition may be exposed to the actinic radiation within the second wavelength range at room temperature, such as from 20 °C to 30 °C.

The dual-cured composition may be further exposed to temperature of at least 50 °C, such as from 50 °C to 100 °C, preferably 50 °C to 80 °C for a time of at least 30 minutes, such as from 15 minutes to 4 hours, 15 minutes to 3 hours, 15 minutes to 2 hours, 30 minutes to 4 hours, 30 minutes to 3 hours, 30 minutes to 2 hours, or any subset thereof, thereby producing a post-cured pressure sensitive adhesive.

A method of using the curable composition may include applying the curable composition to a first substrate; exposing the curable composition to actinic radiation within the first wavelength range, thereby producing an at least partially radically cured composition; adhering the radically cured composition to a second surface; and, either before or after the adhering step, exposing the radically cured composition to actinic radiation within the second wavelength range to create a dual-cured composition.

A method of using a curable composition may include applying the curable composition to a first substrate; exposing the curable composition to actinic radiation within the first wavelength range, thereby producing an at least partially cured radically cured composition; and adhering the radically cured composition to a second surface. The free radical photoinitiator may be capable of sensitizing the photoacid generator and the photoacid generator may be an iodonium salt.

The free radical photoinitiator may be selected from xanthone, thioxanthone, isopropylthioxanthone, chloropropoxythioxanthone, diethylthioxanthone, benzophenone, acetophenone, and phosphine oxides (such as acylphosphine oxide), or derivatives thereof.

The iodonium salt may be selected from bis(4-dodecylphenyl)iodonium hexafluoroantimonate; bis-(4-t-butylphenyl)-iodonium hexafluorophosphate; 4-isopropyl-4'-methyldiphenyliodonium tetrakis(pentafluorophenyl)borate.

### MEASUREMENT METHODS

### 180° Peel Strength

180° Peel Strength is determined according to standard test method ASTM D3330. As described below, the 180° Peel Strength method differs from ASTM D3330 in that the present samples are conditioned in a constant temperature and humidity room for 24 hours, rather than being tested within one minute of preparation as the ASTM standard specifies.

Specifically, the sample is cut into 1-inch strips and laminated onto stainless steel panels with two passes of a Chem Instruments roll down instrument, which applies 4.5 pounds of force at a rate of 10 mm/s in accordance with ASTM D3330. To prepare for 180° peel testing, the sample is conditioned in a constant temperature and humidity room for 24 hours. During 180° peel testing, the sample is pulled at 12 in/min by an Instron machine (Model 5543) with a 100 N load cell, and its peel strength is averaged from 1 - 3 inches of elongation.

Results are reported in units of pounds force per inch of tape width (lb/in).

### Static Shear Resistance

Static shear resistance is determined according to ASTM D3654. As described below, the static shear method differs from ASTM D3654 in that the present samples are conditioned in a constant temperature and humidity room for 24 hours, rather than being tested within one minute of preparation as the ASTM standard specifies. It further differs in that a 1" × 1" square of adhesive is used and that a 500 g weight is used.

Specifically, the samples are prepared in the same manner as the 180° peel strength samples. A 1" × 1" inch square of adhesive is mounted vertically onto the ChemInstruments EZ Shear and a standard 500 g mass is attached to the free end of the tape. Then, the time to failure (the time for the tape to separate completely from the panel) is determined.

### Viscosity

Viscosity is measured using a Brookfield DV-III+ viscometer with SC-27 spindle at room temperature or 60 °C (if viscosity is sufficiently high that the viscometer will not operate at room temperature). Each sample is measured at a certain number of revolutions per minute (rpm) needed to achieve 50% torque range. Viscosity is measured in centipoise (cP) after temperature and sample stabilization are achieved (typically after 10 minutes).

### ASPECTS

1. According to a first aspect, a curable composition may comprise A) a free radical polymerizable resin comprising at least one (meth)acrylate monomer, at least one (meth)acrylate oligomer, or both; B) a cationically polymerizable resin; C) a free radical photoinitiator; D) a photoacid generator; and E) a polyol; wherein a weight ratio of A:B is from 32:1 to 2:1.
2. According to a second aspect, in conjunction with the first aspect, the curable composition may comprise the (meth)acrylate oligomer.
3. According to a third aspect, in conjunction with either of aspects 1-2, the curable composition may comprise from 1 wt. % to 60 wt. %, preferably 2 wt. % to 30 wt. %, more preferably 2 wt. % to 15% of the at least one (meth)acrylate oligomer, on the basis of the total weight of the curable composition.
4. According to a fourth aspect, in conjunction with any one of aspects 1-3, the free radical polymerizable resin may comprise the at least one (meth)acrylate monomer.
5. According to a fifth aspect, in conjunction with any one of aspects 1-4, the at least one (meth)acrylate monomer, the at least one (meth)acrylate oligomer, or both may be monofunctional.
6. According to a sixth aspect, in conjunction with any one of aspects 1-5, the at least one (meth)acrylate monomer may be selected from the group consisting of isobornyl (meth)acrylate (preferably IBOA), an alkoxylated tetrahydrofurfuryl (meth)acrylate (preferably THFA), or both.
7. According to a seventh aspect, in conjunction with any one of aspects 1-6, the curable composition may comprise from 20 wt. % to 89 wt. %, preferably 40 wt. % to 87.5 wt. %, more preferably 50 wt. % to 85 wt. %, of the at least one (meth)acrylate monomer, on the basis of the total weight of the curable composition.
8. According to an eighth aspect, in conjunction with any one of aspects 1-7, the polyol may be a polycaprolactone polyol, a polyether polyol, or a polyester polyol, preferably a polycaprolactone polyol.
9. According to a ninth aspect, in conjunction with any one of aspects 1-8, the curable composition may comprise from 60 wt. % to 90 wt. %, %, preferably 65 wt. % to 87.5 wt. %, more preferably 67.5 wt. % to 86 wt. % of the free radical polymerizable resin, on the basis of the total weight of the curable composition.
10. According to a tenth aspect, in conjunction with any one of aspects 1- 9, the cationically polymerizable resin may comprise an epoxide resin, preferably a multi-functional (preferably difunctional) epoxide resin.
11. According to an eleventh aspect, in conjunction with any one of aspects 1- 10, the epoxide may comprise a cycloaliphatic epoxide.
12. According to a twelfth aspect, in conjunction with any one of aspects 1-11, the cationically polymerizable resin may comprise one or more of glycidyl ethers, vinyl ethers, or oxetanes.
13. According to a thirteenth aspect, in conjunction with any one of aspects 1-12, the curable composition may comprise from 2 wt. % to 30 wt. %, preferably 4 wt. % to 27.5 wt. %, more preferably 5 wt. % to 25 wt. % of the cationically polymerizable resin, on the basis of the total weight of the curable composition.
14. According to a fourteenth aspect, in conjunction with any one of aspects 1-13, the free radical photoinitiator may be sensitive to actinic radiation within a first wavelength range of from 365 nm to 450 nm.
15. According to a fifteenth aspect, in conjunction with any one of aspects 1- 14, the free radical photoinitiator may comprise a compound with structure 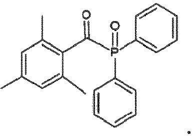
16. According to a sixteenth aspect, in conjunction with aspect 15, the free radical photoinitiator may further comprise a compound with structure 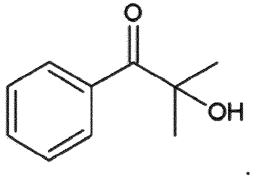
17. According to a seventeenth aspect, in conjunction with any one of aspects 1-16, the curable composition may comprise from 0.5 wt. % to 8 wt. %, preferably 1 wt. % to 7 wt. %, more preferably 3 wt. % to 6 wt. % of the free radical photoinitiator, on the basis of the total weight of the curable composition.
18. According to an eighteenth aspect, in conjunction with any one of aspects 1-17, the photoacid generator may be sensitive to actinic radiation in a second wavelength range of from 200 nm to 400 nm, preferably 200 nm to 320 nm.
19. According to a nineteenth aspect, in conjunction with any one of aspects 1-18, the photoacid generator may be an onium salt.
20. According to a twentieth aspect, in conjunction with aspect 19, the onium salt may be an iodonium salt, such as a diaryliodonium salt and/or a triarylsulfonium salt.
21. According to a twenty-first aspect, in conjunction with aspects 20, the sulfonium salt may comprise a compound of structure 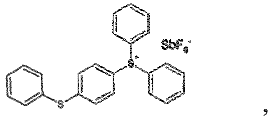 structure 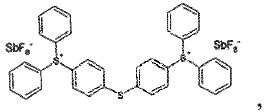 or both.
22. According to a twenty-second aspect, in conjunction with any one of aspects 1-21, the curable composition may comprise from 0.25 wt. % to 5 wt. %, preferably from 0.5 wt. % to 4 wt. %, more preferably from 1 wt. % to 3 wt. % of the photoacid generator, on the basis of the total weight of the curable composition.
23. According to a twenty-third aspect, in conjunction with any one of aspects 1-22, the polyol may be a polycaprolactone polyol.
24. According to a twenty-fourth aspect, in conjunction with any one of aspects 1-23, the polyol may be a triol or higher functional polyol.
25. According to a twenty-fifth aspect, in conjunction with aspect 23, the polycaprolactone polyol may comprise a compound of structure 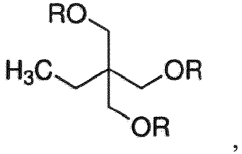 where 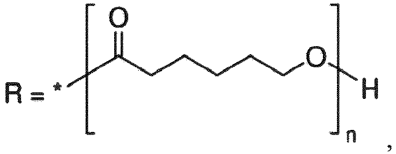 wherein n is from 1 to 10.
26. According to a twenty-sixth aspect, in conjunction with any one of aspects 1-25, the curable composition may comprise from 0.5 wt. % to 10 wt. %, preferably from 0.75 wt. % to 7.5 wt. %, more preferably from 1 wt. % to 5 wt. % of the polyol, on the basis of the total weight of the curable composition.
27. According to a twenty-seventh aspect, in conjunction with any one of aspects 1-26, the weight ratio of A:B may be from 19:1 to 7:3.
28. According to a twenty-eighth aspect, in conjunction with any one of aspects 1-27, the weight ratio of A:B may be from 11:1 to 4:1.
29. According to a twenty-ninth aspect, in conjunction with any one of aspects 1-28, when cured, the curable composition may have a 180 degree peel strength of at least 2 pounds force (lb/inch), preferably 3 lb/in, more preferably 4 lb/in, as measured according to ASTM D3330.
30. According to a thirtieth aspect, in conjunction with any one of aspects 1-29, when cured, the curable composition may have a static shear strength of at least 500 minutes, as measured according to ASTM D3654 under a 500 g load at a temperature of 27 °C.
31. According to a thirty-first aspect, in conjunction with any one of aspects 1-30, a method of curing the curable composition may comprise: exposing the curable composition to actinic radiation within the first wavelength range, thereby producing an at least partially radically cured composition; and exposing the radically cured composition to actinic radiation within the second wavelength range to produce a dual-cured composition.
32. According to a thirty-second aspect, in conjunction with any one of aspects 1-30, a method of curing the curable composition may comprise: exposing the curable composition to actinic radiation within the first wavelength range, thereby producing a dual-cured composition.
33. According to a thirty-third aspect, in conjunction with aspect 1-33, the photoacid generator may comprise an iodonium salt.
34. According to a thirty-fourth aspect, in conjunction with any one of aspects 31-33, the method may further comprise exposing the dual-cured composition to temperature of from 50 °C to 100 °C, preferably 50 °C to 80 °C for 15 minutes to 4 hours, preferably 15 minutes to 3 hours, more preferably 30 minutes to 2 hours.
35. According to a thirty-fifth aspect, in conjunction with any one of aspects 31-34, the first wavelength range may be from 365 nm to 450 nm.
36. According to a thirty-sixth aspect, in conjunction with any one of aspects 31 to 35, the second wavelength range may be from 200 nm to 400 nm, preferably 200 nm to 320 nm.
37. According to a thirty-seventh aspect, in conjunction with any one of aspects 31-36, the curable composition may be exposed to actinic radiation within the first wavelength range with a total first actinic light dose of from 100 mJ/cm² to 2000 mJ/cm², preferably 250 mJ/cm² to 2000 mJ/cm², more preferably 500 mJ/cm² to 2000 mJ/cm².
38. According to a thirty-eighth aspect, in conjunction with any one of aspects 31-37, the curable composition may be exposed to actinic radiation within the first wavelength range at a temperature of 20 °C to 30 °C.
39. According to a thirty-ninth aspect, in conjunction with any one of aspects 31-38, the radically cured composition may be exposed to actinic radiation within the second wavelength range with a total second actinic light dose of from 200 mJ/cm² to 5000 mJ/cm², preferably 500 mJ/cm² to 5000 mJ/cm², more preferably 1,000 mJ/cm² to 5000 mJ/cm², even more preferably 1500 mJ/cm² to 5000 mJ/cm².
40. According to a fortieth aspect, in conjunction with any one of aspects 31-39, the radically cured composition may be exposed to actinic radiation within the second wavelength range at a temperature of from 20 °C to 30 °C.
41. According to a forty-first aspect, in conjunction with any one of aspects 1-30, a method of using the curable composition may comprise: applying the curable composition to a first substrate; exposing the curable composition to actinic radiation within the first wavelength range, thereby producing an at least partially cured radically cured composition; adhering the radically cured composition to a second surface; and either before or after the adhering step, exposing the radically cured composition to actinic radiation within the second wavelength range to produce a dual-cured composition.
42. According to a forty-second aspect, in conjunction with aspect 41, the method may further comprise exposing the dual-cured composition to temperature of 50 °C to 80 °C for a time of 30 minutes to 2 hours.
43. According to a forty-third aspect, in conjunction with any one of aspects 1-30, a method of using the curable composition may comprise: applying the curable composition to a first substrate; exposing the curable composition to actinic radiation within the first wavelength range, thereby producing an at least partially cured radically cured composition; and adhering the radically cured composition to a second surface, wherein: the free radical photoinitiator is capable of sensitizing the photoacid generator; and the photoacid generator is an iodonium salt.
44. According to a forty-fourth aspect, in conjunction with aspect 43, the free radical photoinitiator may be selected from xanthone, thioxanthone, isopropylthioxanthone, chloropropoxythioxanthone, diethylthioxanthone, benzophenone, and acetophenone, or derivatives thereof.
45. According to a forty-fifth aspect, in conjunction with either of aspects 43 or 44, the iodonium salt may be selected from bis(4-dodecylphenyl)iodonium hexafluoroantimonate; bis-(4-t-butylphenyl)-iodonium hexafluorophosphate; 4-isopropyl-4'-methyldiphenyliodonium tetrakis(pentafluorophenyl)borate.
46. According to a forty-sixth aspect, in conjunction with any one of aspects 1 to 30, the free radical photoinitiator may be sensitive to actinic radiation within a first wavelength range.
47. According to a forty-seventh aspect, in conjunction with aspect 46, the first wavelength range may be from 365 nm to 450 nm.
48. According to a forty-eighth aspect, in conjunction with any one of aspects 1 to 30, 46, or 47, the photoacid generator may be sensitive to actinic radiation within a second wavelength range.
49. According to a forty-ninth aspect, in conjunction with aspect 48, the second wavelength range may be from 200 nm to 400 nm, preferably 200 nm to 320 nm.
50. According to a fiftieth aspect, in conjunction with aspect 48, the first wavelength range and the second wavelength range may be overlapping.
51. According to a fifty-first aspect, in conjunction with any one of aspects 1 to 50, the curable composition may comprise from 60 wt. % to 90 wt. %, %, preferably 65 wt. % to 87.5 wt. %, more preferably 67.5 wt. % to 86 wt. % of the free radical polymerizable resin; from 2 wt. % to 30 wt. %, preferably 4 wt. % to 27.5 wt. %, more preferably 5 wt. % to 25 wt. % of the cationically polymerizable resin; from 0.5 wt. % to 8 wt. %, preferably 1 wt. % to 7 wt. %, more preferably 3 wt. % to 6 wt. % of the free radical photoinitiator; from 0.25 wt. % to 5 wt. %, preferably from 0.5 wt. % to 4 wt. %, more preferably from 1 wt. % to 3 wt. % of the photoacid generator; and from 0.5 wt. % to 10 wt. %, preferably from 0.75 wt. % to 7.5 wt. %, more preferably from 1 wt. % to 5 wt. % of the polyol, on the basis of the total weight of the curable composition.

### EXAMPLES

The following examples are provided to illustrate embodiments described in this disclosure and are not intended to limit the scope of this disclosure or its appended claims.

Where an H-bulb is noted in the examples, a 300 watt (W)/inch mercury vapor emission bulb produced by Fusion UV was used.

### Sulfonium Salt Photoacid Generators

A urethane acrylate oligomer (CN9018 from Sartomer Americas, 5 wt. %), isobornyl acrylate (SR506A from Sartomer Americas, 45 wt. %), alkoxylated tetrahydrofurfuryl acrylate (SR611 from Sartomer Americas, 45 wt. %) and a free radical photoinitiator (Speedcure^{™} 4265 from Sartomer Americas, 5 wt. %) were combined to form a pre-polymer blend. Specifically, the components were added to a one-gallon paint can and mixed with an overhead mixer for 3 hours until homogenous. The pre-polymer blend was then added to a polypropylene cup and different ratios of a cationically polymerizable resin (Uvicure^{™} S128 from Sartomer Americas), a polyol (Capa^{™} 3031 from Perstorp Polyols Inc.), and a sulfonium salt photoacid generator (Speedcure^{™} 976 from Sartomer Americas) were added to the pre-polymer blend in the ratios shown in Table 1. The components were mixed at 2000 RPM for 2 minutes until homogenous using a Flacktek^{®} DAC 400.2 VAC high-speed mixer.

**Table 1**

| | CE-A | EX-1 | CE-B | EX-2 |
|---|---|---|---|---|
| Pre-Polymer Blend | 96.5 wt. % | 90 wt. % | 94.1 wt. % | 80 wt. % |
| Uvicure^{™} S128 | 0 wt. % | 6.7 wt. % | 0 wt. % | 15 wt. % |
| Capa^{™} 3031 | 1.4 wt. % | 1.3 wt. % | 3.5 wt. % | 3 wt. % |
| SpeedCure^{™} 976 | 2.1 wt. % | 2 wt. % | 2.4 wt. % | 2 wt. % |

It was desired to test 180° peel strength and static shear each of three types of curing methodologies, a 395 nm LED, a 395 nm LED + an H-bulb, and 395 nm LED + H-bulb + thermal bump (60 °C for 60 min). To compare the peel strength of the samples (CE-A, CE-B, EX-1, EX-2) under each condition, each of the samples (CE-A, CE-B, EX-1, EX-2) were pipetted onto a clean sheet of untreated PET, which was adhered to an aluminum panel with tape of 50 µm thickness. Using the tape as a guide, a zero mil draw-down bar was used to draw the coating down on to the PET substrate. The coating was passed under a Phoseon 395 nm LED (50 fpm, 3 passes) to cure the free radical polymerizable resin and a sample was removed for testing. Next, the remaining samples were passed under a Fusion H bulb curing unit (16 fpm, 3 passes) and a sample was removed for testing. Then, the remaining samples were exposed to a temperature of 60 °C for 60 minutes.

For each sample, once cured, a release liner was manually rolled onto the sample to allow for easier management. The thickness of each sample was recorded in multiple areas to obtain an average thickness. The sample was then cut into strips with a 1-inch diameter and laminated onto stainless steel panels with two passes of a Chem Instruments roll down instrument, which applies 4.5 pounds of force at a rate of 10 mm/s in accordance with ASTM D3330. To prepare for 180° peel testing, each sample was conditioned in a constant temperature (23 °C +/- 2 and humidity (50 % RH =/- 10 % RH) room for 24 hours. During 180° peel testing, the sample was pulled at 12 in/min by an Instron machine (Model 5543) with a 100 N load cell, and its peel strength is averaged from 1 - 3 inches of elongation. Results are shown in Table 2.

**Table 2**

| | CE-A | EX-1 | CE-B | EX-2 |
|---|---|---|---|---|
| LED | 3.69 lb/in | 1.28 lb/in | 1.57 lb/in | 0.73 lb/in |
| LED+H-Bulb | 4.63 lb/in | 4.79 lb/in | 4.48 lb/in | 4.20 lb/in |
| LED+H-Bulb +TB | 2.65 lb/in | 6.71 lb/in | 4.09 lb/in | 6.98 lb/in |

After the LED cure, EX-1 and EX-2 showed peel strength of between 0.8 lb/in and 1.2 lb/in. After the LED+H-bulb cure, which caused the remainder of the free radical polymerizable resin to cure and began curing the cationically polymerizable resin, peel strength for both EX-1 and EX-2 increased to greater than 4.0 lb/in. Without intending to be limited by theory, this is believed to be due to the photoacid generator generating a photoacid and curing the epoxy portion of the sample. It is believed that the propagation of this acid cure will continue to occur over time, as can be seen by the results of the thermal bump. After the thermal bump, the peel strength of both EX-1 and EX-2 increased to around 7 lb/in, while the control samples remained between 2-4 lb/in as they did not have an epoxy compound.

Static shear is a measure of the cohesive strength of the UV-PSA formulations. Static shear allows the measurement of an adhesive's the tape's ability to maintain a bond under a constant load that is applied parallel to the surface.

The static shear procedure is similar to ASTM D3654. The samples were prepared in a similar manner to the 180° peel strength samples shown above. However, for static shear testing, after conditioning in the constant temperature room, a 1" × 1" inch square of adhesive was mounted vertically onto the ChemInstruments EZ Shear and a standard 500 g mass was attached to the free end of the tape. The time to failure (the time for the tape to separate completely from the panel) was determined. Results are given in Table 3.

**Table 3**

| | CE-A | EX-1 | CE-B | EX-2 |
|---|---|---|---|---|
| LED | 4.4 min | 3.0 min | 5.5 min | 34.2 min |
| LED+H-Bulb | 135.4 min | 8.7 min | 7075.3 min | 230.9 min |
| LED+H-Bulb +TB | 202.2 min | 2051.5 min | 65.3 min | 10080.0 min |

After the LED cure, EX-1 and EX-2 showed static shear between 3 min and 34 min. After the LED+H-bulb cure, static shear for EX-1 and EX-2 increased to 9 min and 231 min, respectively. Without intending to be limited by theory, this is believed to be due to the photoacid generator generating a photoacid and curing the epoxy portion of the sample. It is believed that the propagation of this acid cure will continue to occur over time, as can be seen by the results of the thermal bump (TB). After the thermal bump, the static shear of EX-1 and EX-2 increased to 2,052 min and 10,080 min, while the control samples (which did not include an epoxy component) remained between 65 min and 200 min.

### Iodonium Salt Photoacid Generators

A urethane acrylate oligomer (CN9018 from Sartomer Americas, 5 wt. %), Isobornyl acrylate (SR506A from Sartomer Americas, 45 wt. %), alkoxylated tetrahydrofurfuryl acrylate (SR611 from Sartomer Americas, 45 wt. %) and a free radical photoinitiator (Speedcure^{™} 4265 from Sartomer Americas, 5 wt. %) were combined to form a pre-polymer blend. Specifically, the components were added to a one-gallon paint can and mixed with an overhead mixer for 3 hours until homogenous. The pre-polymer blend was then added to a polypropylene cup and different ratios of a cationically polymerizable resin (Uvicure^{™} S128 from Sartomer Americas), a polyol (Capa^{™} 3031 from Perstorp Polyols Inc.), and an iodonium salt photoacid generator (Speedcure^{™} 937 from Sartomer Americas) were added to the pre-polymer blend in the ratios shown in Table 2. The components were mixed at 2000 RPM for 2 minutes until homogenous using a Flacktek^{®} DAC 400.2 VAC high-speed mixer.

**Table 4**

| | CE-C | CE-D | EX-3 |
|---|---|---|---|
| Pre-Polymer Blend | 94.1 wt. % | 81.6 wt. % | 80 wt. % |
| Uvicure^{™} S128 | 0 wt. % | 15.3 wt. % | 15 wt. % |
| Capa^{™} 3031 | 3.5 wt. % | 3.1 wt. % | 3 wt. % |
| SpeedCure^{™} 937 | 2.4 wt. % | 0 wt. % | 2 wt. % |

It was desired to test 180° peel strength and static shear of each of four types of conditioning methodologies, a 395 nm LED, a 395 nm LED + 2 day cure period, a 395 nm LED + 3 day cure period, and 395 nm LED + 7 day cure period. To compare the peel strength of the samples (CE-C, CE-D, EX-3) under each condition, each of the samples (CE-C, CE-D, EX-3) were pipetted onto a clean sheet of untreated PET, which was adhered to an aluminum panel with tape of 50 µm thickness. Using the tape as a guide, a zero mil draw-down bar was used to draw the coating down on to the PET substrate. The coating was passed under a Phoseon 395 nm LED (50 fpm, 3 passes) to cure the free radical polymerizable resin and begin curing the cationically polymerizable resin. The sample was removed for conditioning and testing.

For each sample, once cured, a release liner was manually rolled onto the sample to allow for easier management. The thickness of each sample was recorded in multiple areas to obtain an average thickness. The sample was then cut into strips with a 1-inch diameter and laminated onto stainless steel panels with two passes of a Chem Instruments roll down instrument, which applies 4.5 pounds of force at a rate of 10 mm/s in accordance with ASTM D3330. To prepare for 180° peel testing, each sample was conditioned in a constant temperature (23 °C +/- 2 and humidity (50 % RH =/- 10 % RH) room for 24 hours, 2 days, 3 days or 7 days. During 180° peel testing, the sample was pulled at 12 in/min by an Instron machine (Model 5543) with a 100 N load cell, and its peel strength is averaged from 1 - 3 inches of elongation. Results are shown in Table 5.

**Table 5**

| | CE-C | CE-D | EX-3 |
|---|---|---|---|
| LED | 3.16 lb/in | 0.31 lb/in | 1.15 lb/in |
| LED+2 days | 3.69 lb/in | 0.17 lb/in | 1.00 lb/in |
| LED+3 days | 3.27 lb/in | 0.26 lb/in | 3.26 lb/in |
| LED+7 days | 2.94 lb/in | 0.54 lb/in | 5.36 lb/in |

After the LED cure, EX-3 showed peel strength of 1.15 pounds force per inch (lb/in). After the LED+2 days, peel strength for EX-3 remained constant at 1.00 lb/in. After the LED+3 days, peel strength for EX-3 increased to 3.26 lb/in. After the LED+7 days, peel strength for EX-3 continued to increase to 5.36 lb/in. It is believed that the increased 180° peel strength is due to the Speedcure TPO sensitizing the photoacid generator (Speedcure 937), initiating curing of the epoxy portion of the sample. Control sample CE-C (which did not include an epoxy compounds) remained between 3-4 lb/in. Control sample CE-D (which did not include a photoacid generator) remained between 0-1 lb/in.

The static shear procedure is similar to ASTM D3654. The samples were prepared in a similar manner to the 180° peel strength samples shown above. However, for static shear testing, after conditioning in the constant temperature room, a 1" × 1" inch square of adhesive was mounted vertically onto the ChemInstruments EZ Shear and a standard 500 g mass was attached to the free end of the tape. The time to failure (the time for the tape to separate completely from the panel) was determined. Results are given in Table 6.

**Table 6**

| | CE-C | CE-D | EX-3 |
|---|---|---|---|
| LED | 3.6 min | 0.6 min | 0.9 min |
| LED+2 days | 3.8 min | 0.4 min | 5.2 min |
| LED+3 days | 5.6 min | 0.9 min | 3.4 min |
| LED+7 days | 5.2 min | 1.5 min | 46.5 min |

After the LED cure, EX-3 showed static shear of 0.9 min. After the LED+2 days, static shear for EX-3 increased to 5.2 min. After the LED+3 days, static shear for EX-3 remained constant at 3.4 min. After the LED+7 days, static shear for EX-3 continued to increase to 46.5 min. It is believed that the increased static shear is due to the Speedcure TPO sensitizing the photoacid generator (Speedcure 937), initiating curing of the epoxy portion of the sample. Control sample CE-C (which did not include an epoxy compound) remained between 3-5 min. Control sample CE-D (which did not include a photoacid generator) remained between 0-2 min.

It should be understood that any two quantitative values assigned to a property may constitute a range of that property, and all combinations of ranges formed from all stated quantitative values of a given property are contemplated in this disclosure.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A curable composition comprising:
A) a free radical polymerizable resin comprising at least one (meth)acrylate monomer, at least one (meth)acrylate oligomer, or both;
B) a cationically polymerizable resin;
C) a free radical photoinitiator;
D) a photoacid generator; and
E) a polyol;
wherein a weight ratio of A:B is from 32: 1 to 2:1.

2. The curable composition of claim 1, wherein the at least one (meth)acrylate monomer is monofunctional.

3. The curable composition of either of claims 1 or 2, wherein the at least one (meth)acrylate monomer is selected from the group consisting of isobornyl (meth)acrylate (preferably IBOA), an alkoxylated tetrahydrofurfuryl (meth)acrylate (preferably THFA), or both.

4. The curable composition of any one of claims 1 to 3, wherein the polyol is a polycaprolactone polyol, a polyether polyol, or a polyester polyol, preferably a polycaprolactone polyol.

5. The curable composition of any one of claims 1 to 4, wherein the cationically polymerizable resin comprises an epoxide resin, preferably a multi-functional (preferably difunctional) epoxide resin.

6. The curable composition of any one of claims 1 to 5, wherein the photoacid generator is an onium salt, such as a triarylsulfonium salt.

7. The curable composition of any one of claims 1 to 6, wherein the polyol is a polycaprolactone polyol.

8. The curable composition of any one of claims 1-7, wherein the polyol is a triol or higher functional polyol.

9. The curable composition of any one of claims 1 to 8, wherein the polyol comprises a polycaprolactone polyol comprising a compound of structure 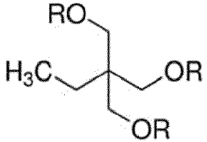 , wherein 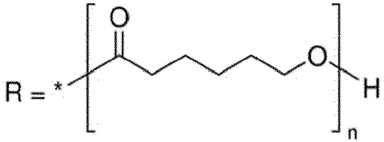 wherein n is from 1 to 10.

10. The curable composition of any one of claims 1 to 9, wherein: the weight ratio of A:B is from 19:1 to 7:3, preferably from 11:1 to 4:1.

11. The curable composition of any one of claims 1 to 10, wherein the curable composition comprises:
from 60 wt. % to 90 wt. %, %, preferably 65 wt. % to 87.5 wt. %, more preferably 67.5 wt. % to 86 wt. % of the free radical polymerizable resin;
from 2 wt. % to 30 wt. %, preferably 4 wt. % to 27.5 wt. %, more preferably 5 wt. % to 25 wt. % of the cationically polymerizable resin;
from 0.5 wt. % to 8 wt. %, preferably 1 wt. % to 7 wt. %, more preferably 3 wt. % to 6 wt. % of the free radical photoinitiator;
from 0.25 wt. % to 5 wt. %, preferably from 0.5 wt. % to 4 wt. %, more preferably from 1 wt. % to 3 wt. % of the photoacid generator; and
from 0.5 wt. % to 10 wt. %, preferably from 0.75 wt. % to 7.5 wt. %, more preferably from 1 wt. % to 5 wt. % of the polyol, on the basis of the total weight of the curable composition.

12. The curable composition of any of claims 1 to 11, wherein the free radical photoinitiator is sensitive to actinic radiation within a first wavelength range and the photoacid generator is sensitive to actinic radiation within a second wavelength range.

13. A method of using the curable composition of any one of claims 1-12, the method comprising:
applying the curable composition to a first substrate;
exposing the curable composition to actinic radiation within a first wavelength range, thereby producing an at least partially cured radically cured composition;
adhering the radically cured composition to a second surface; and
either before or after the adhering step, exposing the radically cured composition to actinic radiation within a second wavelength range to produce a dual-cured composition.

14. The method of claim 13, further comprising exposing the dual-cured composition to temperature of 50 °C to 80 °C for a time of 30 minutes to 2 hours.

15. A method of using the curable composition of any one of claims 1-12, the method comprising:
applying the curable composition to a first substrate;
exposing the curable composition to actinic radiation within a first wavelength range, thereby producing an at least partially cured radically cured composition; and
adhering the radically cured composition to a second surface, wherein:
the free radical photoinitiator is capable of sensitizing the photoacid generator; and
the photoacid generator is an iodonium salt.
